(19) Europäisches Patentamt
European Patent Office
Office européen des brevets

(11) EP 1 857 708 A1

(12) **EUROPÄISCHE PATENTANMELDUNG**

(43) Veröffentlichungstag:
21.11.2007 Patentblatt 2007/47

(51) Int Cl.:
$F16H\ 1/28^{(2006.01)}$      $F16H\ 57/04^{(2006.01)}$

(21) Anmeldenummer: 07006651.9

(22) Anmeldetag: 30.03.2007

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **17.05.2006 DE 102006023380**

(71) Anmelder: **IMS Gear GmbH**
**79871 Eisenbach (DE)**

(72) Erfinder: **Thoma, Helmut**
**79843 Löffingen (DE)**

(74) Vertreter: **Göhring, Robert**
**Westphal - Mussgnug & Partner**
**Patentanwälte**
**Am Riettor 5**
**78048 Villingen-Schwenningen (DE)**

(54) **Planetenrad mit radialer Durchgangsbohrung**

(57) Umlauf-Zahnradgetriebe mit mindestens zwei in einem öl- oder fettgeschmierten Eingriff miteinander kämmenden Zahnrädern (20,30), von denen eines ein mittels einer Lagerung auf einem Bolzen (50) drehbar gelagertes umlaufendes Zahnrad (30) ist, wobei das bolzengelagerte umlaufende Zahnrad (30) mindestens eine radiale Bohrung (43) aufweist, die den Eingriffsraum der Verzahnungen (21,31) mit der Lagerung (61) verbindet.

Mit der vorliegenden Erfindung wird die Lebensdauer des Zahnradgetriebes erhöht.

**Fig. 1**

**Beschreibung**

Die Erfindung betrifft ein Umlauf-Zahnradgetriebe mit mindestens zwei in einem öl- oder fettgeschmierten Eingriff miteinander kämmenden Zahnrädern, von denen eines ein mittels einer Lagerung auf einem Bolzen drehbar gelagertes umlaufendes Zahnrad ist.

Umlauf-Zahnradgetriebe sind z.B. Planetengetriebe. Die umlaufenden Räder, die Planetenräder, sind vor allem bei kompakt ausgeführten Planetengetrieben mittels je eines Gleitlagers auf einem Bolzen gelagert. Beim Betrieb des Planetengetriebes besteht z.B. durch Erhitzung die Gefahr des Fressens der Gleitlagerung. Bei längerem Stillstand des Zahnradgetriebes kann das Gleitlager durch Korrosion beschädigt werden. Beide Verschleißmechanismen beeinträchtigen die Lebensdauer des Umlauf-Zahnradgetriebes.

Die Aufgabe der vorliegenden Erfindung ist es daher, die Lebensdauer des Umlauf-Zahnradgetriebes zu erhöhen.

Diese Aufgabe wird mit den Merkmalen des Hauptanspruchs gelöst. Dazu weist das bolzengelagerte umlaufende Zahnrad mindestens eine radiale Bohrung auf, die den Eingriffsraum der Verzahnungen mit der Lagerung verbindet.

Beim Betrieb des Zahnradgetriebes wälzen die Zahnräder aufeinander ab. Hierbei wird Schmiermittel in die Bohrung des bolzengelagerten Zahnrades gefördert. Durch weiteres Fördern dringt das Schmiermittel in die Gleitfuge und vermindert die Reibung der Gleitlagerung. Hierdurch wird der Verschleiß der Gleitlagerung vermindert und die Lebensdauer des Zahnradgetriebes erhöht.

Weitere Einzelheiten der Erfindung ergeben sich aus den Unteransprüchen und der nachfolgenden Beschreibung einer schematisch dargestellten Ausführungsform.

Figur 1:    Planetengetriebe;

Figur 2:    Schnitt durch ein Planetenrad;

Figur 3:    Planetenrad.

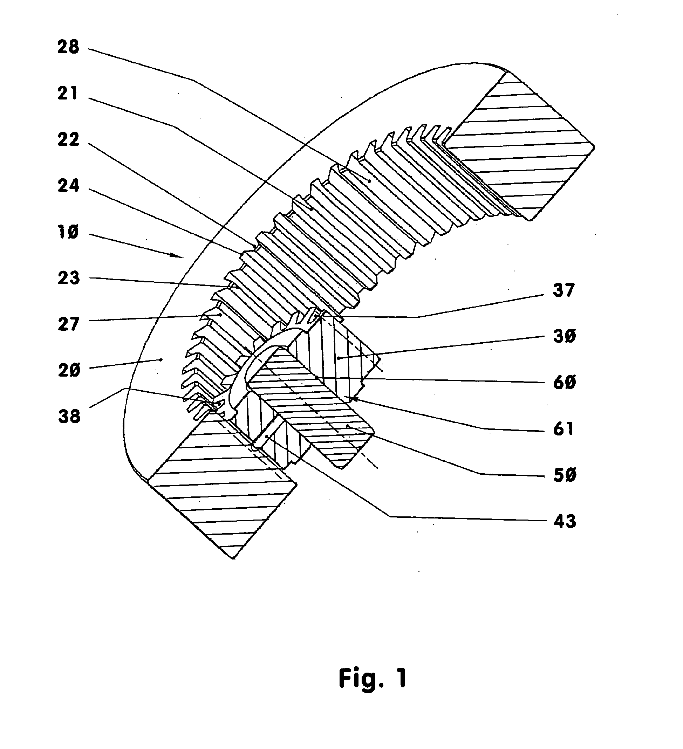

Die Figur 1 zeigt als Teile eines Stirnrad-Planetengetriebes 10 ein Hohlrad 20 und ein mit dem Hohlrad 20 kämmendes Planetenrad 30 dargestellt. Das Planetengetriebe 10 umfasst beispielsweise ein Hohlrad 20, drei Planetenräder 30, einen Planetenträger und ein Sonnenrad. Es wird z.B. mittels des Sonnenrades angetrieben. Das Hohlrad 20 ist dann beispielsweise fest mit einem Gehäuse verbunden. Der Planetenträger bildet dann z.B. den Abtrieb.

Das hier beschriebene Umlauf-Zahnradgetriebe 10 kann auch derart aufgebaut sein, dass das Sonnenrad oder der Planetenträger fest mit dem Gehäuse verbunden ist. Im ersten Fall ist der Planetenträger oder das Hohlrad das angetriebene Rad und das jeweils andere Bauteil der Abtrieb. Bei einem feststehenden Planetenträger ist das Getriebe ein Standgetriebe, wie es beispielsweise in einem Vorgelegegetriebe eingesetzt werden kann. In diesem Fall ist das Sonnenrad oder das Hohlrad das angetriebene Rad und das jeweilige andere Rad der Abtrieb.

Es ist auch denkbar, dass sämtliche Glieder des Planetengetriebes 10 drehbar ausgeführt sind. Das Stirnrad-Planetengetriebe 10 ist in diesem Fall ein Planeten-Verzweigungsgetriebe oder ein Differentialgetriebe.

Das in der Figur 1 dargestellte Stirnrad-Planetengetriebe 10 ist beispielsweise ein dreiwelliges einstegiges Getriebe. Das Planetengetriebe 10 kann auch mehrstegig ausgeführt sein, z.B. als Kombination mehrerer Planetensätze. Das Planetengetriebe 10 kann als Plusgetriebe mit positiver Standübersetzung oder als Minusgetriebe mit negativer Standübersetzung ausgeführt sein.

Das Hohlrad 20, der Planetenträger und das Sonnenrad sind z.B. koaxial zueinander angeordnet. Die Planetenräder 30 sind beispielsweise um jeweils 120 Grad versetzt zueinander auf einem gemeinsamen Teilkreis angeordnet, dessen Durchmesser der Hälfte der Summe der Verzahnungsteilkreise des Hohlrades 20 und des Sonnenrades entspricht. Jedes der Planetenräder 30 ist in diesem Ausführungsbeispiel drehbar auf jeweils einem zentralen Bolzen 50 gelagert. Die Bolzen 50 sind beispielsweise fest mit dem Planetenträger verbunden.

Das Hohlrad 20, die Planetenräder 30 und das Sonnenrad haben in diesem Ausführungsbeispiel eine Evolventenverzahnung mit einem Modul von z.B. 0,8 Millimetern. Das innenverzahnte Hohlrad 20 hat beispielsweise 48 Zähne 22. Das einzelne gradverzahnte Planetenrad 30 hat hier 19 Zähne 32. Das Hohlrad 20 ist beispielsweise um 50 % breiter als das einzelne Planetenrad 30.

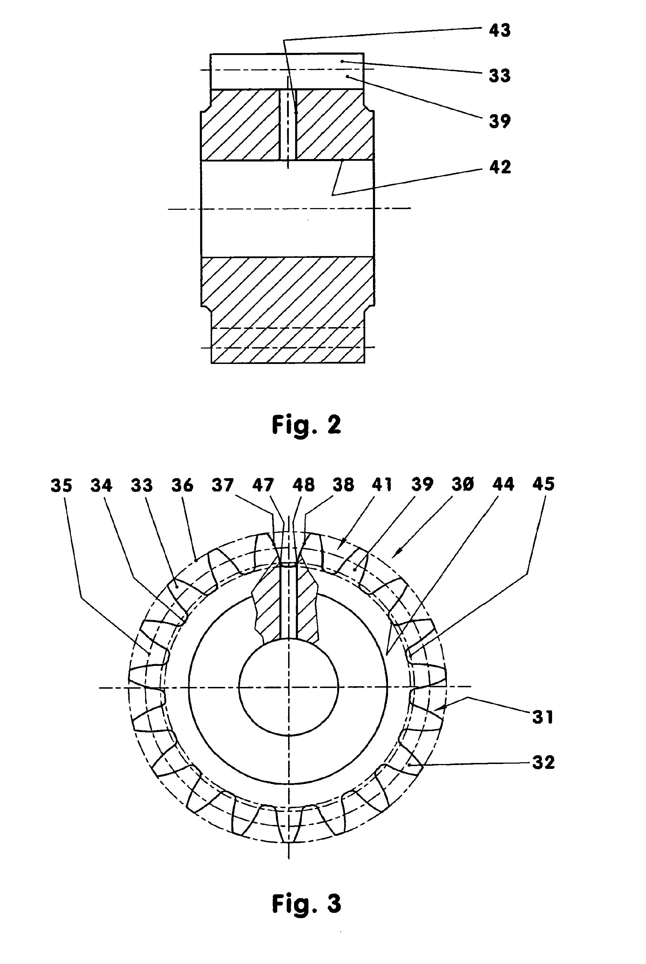

Das Planetenrad 30 ist im Detail in den Figuren 2 und 3 dargestellt. Die Länge des Planetenrades 30 beträgt im Ausführungsbeispiel 8,7 Millimeter. Der Durchmesser des Kopfkreises 36 ist 15,9 Millimeter. Er hat eine Toleranz von +0,1 Millimeter. Die Verzahnungslänge ist hier einen Millimeter kürzer als die Länge des Planetenrades 30. Beispielsweise ist die Verzahnung 31 ballig ausgeführt, um einen Kantenlauf des Planetenrades 30 im Hohlrad 20 zu verhindern. Aus den Verzahnungsdaten des Ausführungsbeispiels ergibt sich ein Teilkreisdurchmesser der Verzahnung (31) von 14,4 Millimetern. Der Eingriffswinkel der Verzahnung (31) beträgt z.B. 20 Grad. Die Kopfhöhe des einzelnen Zahns 32 - der Abstand des Zahnkopfes 33 zum Teilkreis 35 - entspricht beispielsweise dem Modul des Planetenrades 30. Die Höhe des Zahnfußes 39 - der Abstand des Zahngrunds 34 zum Teilkreis 35 - ist z.B. um das Kopfspiel höher als der Modul. Das Kopfspiel beträgt beispielsweise ein Viertel des Moduls.

Zur Aufnahme des Bolzens 50 hat das Planetenrad 30 eine in seiner Längsrichtung orientierte zylindrische Durchgangsbohrung 42. Diese hat beispielsweise einen Durchmesser von 5,03 Millimeter mit einer Toleranz von +0,02 Millimetern.

Das in den Figuren 2 und 3 dargestellte Planetenrad 30 hat außerdem eine radial orientierte zylindrische Bohrung 43. Diese verbindet den Zahngrund 34 mit der Durchgangsbohrung 42. Ihr Durchmesser beträgt in diesem Ausführungsbeispiel etwa 1 Millimeter. Der Durchmesser der Bohrung 43 ist damit größer als der Modul der Verzahnung. Statt einer einzigen Bohrung 43 kann das Planetenrad 30 mehrere Bohrungen 43 aufweisen. Diese können z.B. versetzt zueinander im gleichen Zahngrund 34 oder in unterschiedlichen Zahngründen 34 angeordnet sein. Statt zylindrischer Bohrungen 43 sind auch kegelförmige Bohrungen 43 denkbar. Die Bohrungen 43 verjüngen sich dann z.B. vom Zahngrund 34 zur Durchgangsbohrung 42.

Die Durchgangsbohrung 42 kann eine Längs- oder eine Spiralnut aufweisen, die den Auslauf der radialen Bohrung 43 durchdringt.

Das Planetenrad ist beispielsweise aus einem Einsatzstahl, z.B. 16MnCr5, Werkstoffnummer 1.7131, hergestellt. Bei der Herstellung wird z.B. zunächst die Durchgangsbohrung 42 und die Verzahnung 31 erzeugt. Anschließend wird die Bohrung 43 eingebracht. Zum Abschluss wird das Werkstück einsatzgehärtet.

Der Bolzen 50 hat zumindest im Bereich der Planetenradaufnahme einen zylindrischen Querschnitt von beispielsweise 5 Millimetern. Er besteht z.B. aus einem pulvermetallurgisch hergestellten Werkstoff, aus Stahl, etc.

Bei der Montage wird das Planetenrad 30 auf den Bolzen 50 geschoben und gegen axiales Verschieben gesichert. Der Bolzen 50 und die Durchgangsbohrung 42 haben eine Spielpassung. Nach der Montage werden die Verzahnungen 21, 31 beispielsweise mit einem Fett geschmiert. Ist das Planetengetriebe 10 in einem Gehäuse angeordnet, kann das Getriebe auch mit einem Öl geschmiert werden.

Beim Betrieb des Planetengetriebes 10 wälzt beispielsweise das Planetenrad 30 im Hohlrad 20 ab. Hierbei berührt z.B. eine Zahnflanke 37 des Planetenrades 30 eine entgegengesetzt gerichtete Zahnflanke 27 des Hohlrades 20 - bei einem vereinfacht in einer Ebene dargestellten Räderpaar - in einem Punkt der Eingriffslinie. Dieser Punkt, der Wälzpunkt, liegt beim abwälzenden Rad 30 nahe des Zahnfußes 39 und beim stehenden Rad 20 nahe des Zahnkopfes 23. Beim Weiterdrehen des Planetenrades 30 wandert der momentane Wälzpunkt der beiden Zahnflanken 37, 27 entlang der Wälzfuge beim abwälzenden Rad 30 in Richtung des Zahnfußes 39 und beim stehenden Rad 20 in Richtung des Zahnkopfes 23. Die Länge der Wälzfuge wird hier durch den Schnittpunkt der Teilkreise der beiden Verzahnungen 21, 31 geteilt. Sobald der Zahnkopf 33 des abwälzenden Rades 30 die Zahnflanke 27 des stehenden Rades 20 verlässt, kommt die Gegenflanke 38 des Zahns 32 des abwälzenden Rades 30 mit der Gegenflanke 28 des nächsten Zahnes 22 des stehenden Rades 20 in Eingriff. Hierbei erfolgt keine Berührung des Zahnkopfs 33 mit dem Zahngrund 24 des Gegenrades 20. Der neue Wälzpunkt liegt am Kopfkreis 36 des abwälzenden Rades 30 und nahe des Fußkreises des stehenden Rades 20. Beim Weiterdrehen des abwälzenden Rades 30 wandert der momentane Wälzpunkt entlang der neuen Wälzfuge in Richtung des Fußkreises 44 des stehenden Rades 30 und in Richtung des Zahnkopfes 23 des abwälzenden Rades 20.

Beim Abwälzen der beiden Räder 20, 30 dreht sich das Planetenrad 30 auf dem Bolzen 50. Diese beiden Teile 30, 50 bilden ein Radialgleitlager 60 mit einer Gleitfuge 61.

Der vom Zahngrund 34 und dem Zahnkopf 23 eingeschlossene Raum sowie die jeweilige Wälzfuge werden im Folgenden als Eingriffsraum bezeichnet. Beim Abwälzen der Zahnräder 20, 30 wird das Schmiermittel im Eingriffsraum verteilt. Sobald die Zahnlücke 41 des Planetenrades 30 über einem Zahn 22 des Hohlrades 20 abwälzt, wird Fett in die Bohrung 43 gepresst. Beim wiederholten Abwälzen der Räder 20, 30 wird durch Pumpwirkung zusätzliches Fett in die Bohrung 43 gepresst und das bereits in der Bohrung 43 befindliche Fett in Richtung der Durchgangsbohrung 42 gefördert. Hier dringt das Fett in die Gleitfuge 61 und wird durch das Drehen des Planetenrades 30 auf dem Bolzen 50 in der Gleitfuge 61 verteilt. Durch die kontinuierliche Schmierung wird ein Verschleiß der Gleitfuge 61 verhindert. Die Lebensdauer des Planetengetriebes 10 wird dadurch erhöht.

Aufgrund des großen Durchmessers der Bohrung 43 steht bei dem hier beschriebenen kompakten Stirnrad-Planetengetriebe 10 an der Gleitfuge 61 immer genügend Schmiermittel zur Verfügung. Hierbei kann beispielsweise eine kegelförmig ausgeführte Bohrung 43 als Schmierfettreservoir dienen. Der maximale Durchmesser der Bohrung 43 wird begrenzt durch den Abstand der fußpunktseitigen Endpunkte 47, 48 der Wälzfugen zweier sich gegenüberliegender Zahnflanken 37, 38 des Planetenrades 30. Der Abstand dieser Endpunkte 47, 48 ist größer oder gleich dem Abstand der Schnittpunkte des Grundkreises 45 der Verzahnung 31 mit den Zahnflanken 37, 38. Letzter berechnet sich zu:

$$l_g = d_g * (PI/z - (s_t/d_t + inv(alpha)))$$

mit:

| | |
|---|---|
| $l_g$: | Abstand der Zahnflanken auf dem Grundkreis |
| $d_g$: | Durchmesser des Grundkreises |
| PI: | Kreiszahl |
| Z: | Zähnezahl |
| $s_t$: | Zahndicke und Lückendicke auf dem Teilkreis |
| $d_t$: | Durchmesser des Teilkreises |
| alpha: | Eingriffswinkel der Verzahnung |

Im Ausführungsbeispiel ergibt sich dieser Wert zu 0,915 mm.

Bezugszeichenliste

| | |
|---|---|
| 10 | Stirnrad-Planetengetriebe, Umlauf-Zahnradgetriebe |
| 20 | Hohlrad, stehendes Rad |
| 21 | Verzahnung |
| 22 | Zahn von 20 |
| 23 | Zahnkopf |
| 24 | Zahngrund |
| 27 | Zahnflanke |
| 28 | Gegenflanke |
| 30 | umlaufendes Zahnrad, Planetenrad, abwälzendes Rad |
| 31 | Verzahnung |
| 32 | Zahn von 30 |
| 33 | Zahnkopf |
| 34 | Zahngrund |
| 35 | Teilkreis |
| 36 | Kopfkreis |
| 37 | Zahnflanke |
| 38 | Gegenflanke |
| 39 | Zahnfuß |
| 41 | Zahnlücke |
| 42 | Durchgangsbohrung |
| 43 | radial orientierte Bohrung |
| 44 | Fußkreis |
| 45 | Grundkreis von 30 |
| 47 | Endpunkt der Wälzfuge an 37 |
| 48 | Endpunkt der Wälzfuge an 38 |
| 50 | Bolzen |
| 60 | Radialgleitlager |
| 61 | Gleitfuge |

**Patentansprüche**

1. Umlauf-Zahnradgetriebe mit mindestens zwei in einem öl- oder fettgeschmierten Eingriff miteinander kämmenden Zahnrädern, von denen eines ein mittels einer Lagerung auf einem Bolzen drehbar gelagertes umlaufendes Zahnrad ist,
**dadurch gekennzeichnet, dass** das bolzengelagerte umlaufende Zahnrad (30) mindestens eine radiale Bohrung (43) aufweist, die den Eingriffsraum der Verzahnungen (21, 31) mit der Lagerung (61) verbindet.

2. Umlauf-Zahnradgetriebe nach Anspruch 1,
**dadurch gekennzeichnet, dass** die Bohrung (43) im Zahngrund (34) des umlaufenden Zahnrades (30) angeordnet ist.

3. Umlauf-Zahnradgetriebe nach Anspruch 2,
**dadurch gekennzeichnet, dass** der Durchmesser der Bohrung (43) kleiner ist als der Abstand der fußpunktseitigen Endpunkte (47, 48) der Wälzfugen zweier sich gegenüberliegender Zahnflanken (37, 38) des umlaufenden Zahnrades (30).

4. Umlauf-Zahnradgetriebe nach Anspruch 2 oder 3,
**dadurch gekennzeichnet, dass** der Durchmesser der Bohrung (43) größer ist als der Modul der Verzahnung (31).

5. Umlauf-Zahnradgetriebe nach Anspruch 1,
**dadurch gekennzeichnet, dass** der Bolzen (50) an einem Planetenträger befestigt ist.

6. Umlauf-Zahnradgetriebe nach Anspruch 1 oder 5,
**dadurch gekennzeichnet, dass** das umlaufende Zahnrad (30) mit einem Hohlrad (20) kämmt.

7. Umlauf-Zahnradgetriebe nach Anspruch 1, 5 oder 6,
**dadurch gekennzeichnet, dass** das umlaufende Zahnrad (30) mit einem Sonnenrad kämmt.

**Fig. 1**

43

33

39

42

**Fig. 2**

35 34 33 36 37 47 48 38 41 39 30 44 45

31

32

**Fig. 3**

**Europäisches Patentamt**

# EUROPÄISCHER RECHERCHENBERICHT

Nummer der Anmeldung

EP 07 00 6651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 821 908 A (MARSCH J ET AL) 2. Juli 1974 (1974-07-02) * das ganze Dokument * ----- | 1-7 | INV. F16H1/28 F16H57/04 |
| A | GB 1 209 792 A (BABCOCK & WILCOX CO [US]) 21. Oktober 1970 (1970-10-21) * das ganze Dokument * ----- | 1 | |
| A | EP 1 201 965 A (NISSAN MOTOR [JP]) 2. Mai 2002 (2002-05-02) * Abbildungen 1,4 * ----- | 1 | |
| A | GB 2 298 695 A (VELUPILLAI KUMAR [GB]) 11. September 1996 (1996-09-11) * das ganze Dokument * ----- | 1 | |
| A | GB 1 328 448 A (STAL LAVAL TURBIN AB) 30. August 1973 (1973-08-30) * das ganze Dokument * ----- | 1 | |

RECHERCHIERTE SACHGEBIETE (IPC)

F16H

Der vorliegende Recherchenbericht wurde für alle Patentansprüche erstellt

| Recherchenort | Abschlußdatum der Recherche | Prüfer |
|---|---|---|
| München | 12. Juni 2007 | Szodfridt, Tamas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EP 1 857 708 A1

**ANHANG ZUM EUROPÄISCHEN RECHERCHENBERICHT**
**ÜBER DIE EUROPÄISCHE PATENTANMELDUNG NR.**

EP 07 00 6651

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 3821908 | A | 02-07-1974 | CA | 980150 A1 | 23-12-1975 |
| GB 1209792 | A | 21-10-1970 | US | 3424022 A | 28-01-1969 |
| EP 1201965 | A | 02-05-2002 | JP | 3726670 B2 | 14-12-2005 |
| | | | JP | 2002130412 A | 09-05-2002 |
| | | | US | 2002049113 A1 | 25-04-2002 |
| GB 2298695 | A | 11-09-1996 | KEINE | | |
| GB 1328448 | A | 30-08-1973 | SE | 335934 B | 14-06-1971 |

EPO FORM P0461

Für nähere Einzelheiten zu diesem Anhang : siehe Amtsblatt des Europäischen Patentamts, Nr.12/82

9